# EUROPÄISCHE PATENTSCHRIFT

(11) **EP 3 456 286 B1**
(45) Veröffentlichungstag und Bekanntmachung des Hinweises auf die Patenterteilung: **01.04.2020**
(21) Anmeldenummer: 17191683.6
(22) Anmeldetag: 18.09.2017
(51) Int. Cl.: A61C 8/00

(54) **ABUTMENT UND ABUTMENT-SYSTEM**
ABUTMENT AND ABUTMENT SYSTEM
ABOUTEMENT ET SYSTÈME D'ABOUTEMENT

(43) Veröffentlichungstag der Anmeldung: 20.03.2019
(73) Patentinhaber: Single, Bernd, 72488 Sigmaringen (DE)
(72) Erfinder: Single, Bernd, 72488 Sigmaringen (DE)
(74) Vertreter: Otten, Roth, Dobler & Partner mbB Patentanwälte

(56) Entgegenhaltungen:
- DE-T5-112012 001 947
- DE-U1- 20 110 768
- US-A- 4 713 004
- US-A- 5 527 182

## Beschreibung

Die Erfindung betrifft ein Abutment als Zwischenstück zwischen einem Implantat und einer Suprakonstruktion, zum Beispiel einer Krone, sowie ein Abutment-System.

Aus dem Stand der Technik ist beispielsweise aus der US 8 926 326 B2 eine einteilige Baueinheit bekannt, welche ein Implantat und ein Abutment umfasst, die nicht voneinander getrennt werden können und in den Bereich der sogenannten Miniimplantate (mit einem Gewindedurchmesser am Implantat von weniger als 3 mm) einzuordnen sind. Der Abschnitt des Implantates wird mittels der integrierten Werkzeugaufnahme in den Knochen eingebracht, und der Abschnitt des Abutments dient zur Aufnahme von präfabrizierten Verbindungselementen für die Suprakonstruktion. Miniimplantate haben aufgrund ihrer Belastbarkeit und der daraus resultierenden Krafteinwirkung für den menschlichen Knochen ihre Indikation (in der Hauptsache) für Vollprothesen mit integrierten präfabrizierten Verbindungselementen für den Ober- und Unterkiefer, welche nur einen geringen Teil der Versorgungsvielfalt widerspiegeln. Außerdem ist bei dieser einteiligen Baueinheit die Mittelachse des Implantats und des Abutments identisch, wodurch eine individuelle horizontale und vertikale, lotgerechte, parallele und hierdurch optimale Positionierung der präfabrizierten Verbindungselemente auf dem Abutment zur prothetischen Einschubrichtung nicht erreicht werden kann.

Zu einem anderen Zweck als zur Herstellung eines dauerhaften Zahnersatz-Abutments, nämlich zur Simulation der Zahnbeweglichkeit, sind zu Versuchszwecken sogenannte intramobile Elemente entwickelt worden, die nicht zum technischen Gebiet der Zahnprothesen und Implantate zählen. Diese intramobilen Elemente eignen sich jedoch weniger für die Bereitstellung eines Zahnersatzes für Patienten, sondern dienen vielmehr dazu, die natürliche Beweglichkeit bei gesunden Zähnen nachzuempfinden und zu simulieren. Bei diesen intramobilen Elementen wird das Abutment mit einem weiteren Körper verbunden, welcher jedoch mit Spiel auf dem Abutment gelagert ist. Um ein Wackeln beider mit Spiel gelagerter Teile in Bezug zueinander zu vermeiden und diese zudem gegeneinander abzudichten, wird in den Zwischenraum ein Dämpfungselement eingebracht.

Ferner ist aus der WO 17/090037 ein zweiteiliges Abutment bekannt, wobei eines der beiden Teile wiederum über eine Durchgangsbohrung verfügt, durch die eine Schraube zur Befestigung mit dem anderen Teil eingesetzt werden kann.

Ferner wird die US 5 527 182 A genannt.

Aufgabe der Erfindung ist es, ein Abutment vorzuschlagen, welches grundsätzlich als universelles, aber auch einfach einbaubares Präfabrikat oder zumindest teilweise als universelles Präfabrikat bereitgestellt werden kann.

Die Aufgabe wird, ausgehend von einem Abutment der eingangs genannten Art, durch die Merkmale des Anspruchs 1 gelöst.

Durch die in den abhängigen Ansprüchen genannten Maßnahmen sind vorteilhafte Ausführungen und Weiterbildungen der Erfindung möglich.

Bei einem Abutment gemäß der Erfindung handelt es sich um eine technische Verbindung zwischen dem im Knochen eingesetzten Implantat und der für den Zahnersatz erforderlichen Suprakonstruktion, zum Beispiel der eigentlichen Krone, die größtenteils den von außen sichtbaren Teil des Zahnersatzes bildet.

Das erfindungsgemäße Abutment ist als separates Bauteil nicht einteilig zusammen mit dem Implantat ausgebildet, wobei es sich bei dem Implantat um das Bauteil handelt, das unmittelbar in den Knochen eingeschraubt wird. Das erfindungsgemäße Abutment ist genau 2-teilig ausgebildet, wobei ein Teil als Supportträger und der andere Teil als Support ausgebildet ist. Der Supportträger dient zur Herstellung einer Verbindung zwischen Abutment und Implantat sowie der Verbindung des Supportträgers mit dem Support. Der Supportträger weist entsprechend ein Verbindungselement zur Verbindung mit dem Implantat auf. Der Support wiederum, der mit dem Supportträger zu verbinden ist, dient zum Aufbau bzw. zur Befestigung der Suprakonstruktion, also etwa der Krone am Abutment. Der Support dient aber auch zur Abdichtung eines Schraubenkanals, der zum Verbindungselement zur Verbindung von Abutment und Implantat dient. Zum Aufbau der Suprakonstruktion kann auf den Support ein Supportadapter aufgebracht werden.

Die sogenannte Restaurationsachse oder prothetische Einschubrichtung wiederum beschreibt die Richtung, in der später der Zahn bzw. der Zahnersatz im Mund ausgerichtet ist.

Die Längsachse bzw. Mittelachse des Implantats beschreibt die Richtung, in der das Implantat in der Regel in den Knochen eingeschraubt wird. Diese kann durchaus von der Restaurationsachse bzw. der prothetischen Einschubrichtung abweichen, da das Implantat an einer Stelle bzw. in einem Winkel in den Knochen einzubringen ist, welche dies aus Stabilitätsgründen, Platzgründen oder aus sonstigen zahnmedizinischen Gründen zulässt.

Das Verbindungselement kann zum Beispiel darin bestehen, dass eine Aufnahme bzw. Halterung für eine Schraube vorgesehen wird, d.h. es kann in den Supportträger bzw. in das Verbindungselement selbst eine Schraube eingesetzt werden, mit welcher der Supportträger am Implantat befestigt wird. Wird der Supportträger über eine gesonderte Schraube am Implantat befestigt, so ist diese Bauart in der Regel flexibler einsetzbar als etwa eine Ausführungsform, bei welcher der Supportträger mit einem fest daran angebrachten Gewinde ausgestattet ist, vor allem, wenn die prothetische Einschubrichtung nicht ohne Weiteres mit der Längsachse des Implantats übereinstimmt; denn in einem solchen Fall ist es in der Regel notwendig, das Abutment in Bezug auf seine Ausmaße so anzupassen, dass es vollständig beim Verbinden mit dem Implantat im Mund gedreht werden kann. Ist ein fest am Supportträger angebrachtes Gewinde vorgesehen, so muss beim Einschrauben der Supportträger grundsätzlich ebenfalls rotieren. Dies ist insofern nachteilig, da gegebenenfalls mehr Raum bei der Montage benötigt wird, und zudem eine Verdrehsicherung auch schwieriger zu realisieren ist. Ist eine separate Schraube hingegen vorgesehen, so kann vorteilhafterweise der Supportträger zum Beispiel eine an das Implantat angepasste Passform besitzen, die selbst wiederum als Verdrehsicherung fungiert, etwa, weil im verbundenen Zustand ein Formschluss vorliegt, der sich nicht ohne Weiteres verdrehen lässt.

Erfindungsgemäß weist der Supportträger eine Aufbauplattform auf. Auf dieser Aufbauplattform wiederum befindet sich ein Verbindungskörper, der zur Herstellung der Verbindung mit dem Support dient. Erfindungsgemäß ist dieser Verbindungskörper mit einem Außengewinde ausgestattet und senkrecht zur Aufbauplattform ausgerichtet. Dies ermöglicht zunächst eine vereinfachte Geometrie, die auch den Einbau in den Mundraum grundsätzlich erleichtern kann. Im Unterschied zum Stand der Technik, bei dem allenfalls Innengewinde in den Supportträger eingebracht werden, ermöglicht diese Maßnahme eine höhere Stabilität, da bei gleich großem Verbindungskörper das Außengewinde in der Regel einen größeren Durchmesser aufweisen kann und somit meist stabiler wirkt. Darüber hinaus muss berücksichtigt werden, dass, wie bereits oben angesprochen, der Supportträger weiteren geometrischen Einschränkungen unterworfen sein kann.

Es wurde bereits dargestellt, dass die prothetische Einschubrichtung meist nicht mit der Längs-/Mittelachse des im Knochen eingebrachten Implantats übereinstimmt, sondern diese in einem (grundsätzlich beliebigen) Winkel je nach vorherrschender Geometrie zueinander stehen. Ferner wurde dargestellt, dass aus diesem Grund in vorteilhafter Weise meist eine separate Schraube in den Supportträger eingelegt werden kann, die dann zur Verbindung mit dem Implantat festgezogen wird. Eine derartige Verbindungsvorrichtung benötigt jedoch einen bestimmten Bauraum innerhalb des Supportträgers und verlangt insbesondere einen freien Zugang, um die Schraube einbringen zu können. Die dafür benötigte Ausnehmung innerhalb des Supportträgers kann nicht nur die Aufbauplattform, sondern auch den Verbindungskörper erfassen. Dies bedeutet aber wiederum, dass der Verbindungskörper nicht ohne Weiteres mit einem Innengewinde oder mit einer Durchgangsbohrung versehen werden kann, weil im Falle einer Durchgangsbohrung die durch die Durchgangsbohrung hindurchgeführte Schraube an dieser Stelle nicht mehr gehalten würde und auch ein Innengewinde deutlich an Stabilität verlieren würde. Diese Nachteile können im Zusammenhang mit einem Außengewinde entfallen, da dieses zum einem einen größeren Durchmesser aufweisen kann und daher grundsätzlich stabiler wirkt, selbst wenn ein Teil des Außengewindes entfällt.

Außerdem ist zu berücksichtigen, dass ferner der Support als Hülse ausgebildet ist, die wiederum ein Innengewinde aufweist, das mit dem Außengewinde des Supportträgers in Wirkverbindung steht. Da der Support in der Regel selbst nicht im Zusammenhang mit dem Innengewinde unterbrochen ist und das Außengewinde vollständig umgeben kann, ermöglicht dies somit gegenüber dem Stand der Technik ein höheres Maß an Stabilität. Der Support wiederum ist erfindungsgemäß mit dem Supportträger über das Gewinde formschlüssig verbunden.

Der Umstand, dass oftmals die prothetische Einschubrichtung einen Winkel zur Längs-/Mittelachse des Implantats aufweist, wird gemäß der Erfindung dadurch ausgeglichen, dass das Verbindungselement im Supportträger in einem entsprechenden Winkel zur Restaurationsachse angeordnet ist, der wiederum der prothetischen Einschubrichtung entspricht. Der Verbindungskörper wiederum kann somit lotrecht bzw. senkrecht zur Aufbauplattform ausgerichtet sein, also parallel zur Restaurationsachse. Dies erleichtert wiederum das Aufbringen des Supports am Supportträger bzw. entsprechend auch die weitere Montage einer Suprakonstruktion (z.B. Krone). Insgesamt wird also beim Einbau weniger Raum benötigt.

Ein besonderer Vorteil besteht darin, dass die Anschlussgeometrie zur Verbindung von Implantat und Supportträger präfabriziert werden kann bzw. der Support präfabriziert ist und/oder ein Supportadapter für die Suprakonstruktion ebenfalls präfabriziert ist/sind. Das Abutment muss also nicht für jeden Einzelfall als Unikat eigens hergestellt werden. Zumindest können aber einzelne Anschlussgeometrien abgespeichert und für verschiedene Abutments verwendet werden. Hierdurch kann auch die Wartezeit, die Patienten auf die Fertigstellung des passenden Zahnersatzes insgesamt warten müssen, verringert werden, da zumindest für diesen Teil der gesamten Zahnprothese erfindungsgemäß (zumindest in Teilen, vor allem bzgl. der Anschlussgeometrie) ein Standard-Abutment eingesetzt werden kann.

Die Aufbauplattform kann gewissermaßen als Basis des Abutments dienen. Sie kann zum Beispiel eine ebene Fläche um das Verbindungselement herum ausbilden, sodass der Support nicht nur auf dem Verbindungskörper aufgebaut werden, sondern auch am Boden bündig mit der Aufbauplattform abschließen kann.

Bei einer vorteilhaften Ausführungsform der Erfindung kann der Verbindungskörper zumindest abschnittsweise, insbesondere aber auch vollständig als Zylinder ausgebildet sein. Bei einem Zylinder handelt es sich um eine geometrische Standardform, welche grundsätzlich einfach hergestellt werden kann.

Eine zumindest abschnittsweise Ausbildung des Verbindungskörpers kann in zweifacher Hinsicht verstanden werden: Beispielsweise kann ein Verbindungskörper, der zum Teil zylinderförmig ist, in seinem Fußbereich, welcher an die Aufbauplattform angrenzt, einen Kegelstumpf aufweisen, d.h. der eigentliche Zylinder ist nur im oberen, der Aufbauplattform abgewandten Teil des Verbindungskörpers ausgebildet. Der gesamte Verbindungskörper (bzw. zumindest abschnittsweise) kann auch als Kegelstumpf oder zum Beispiel aus zwei verschiedenen Kegelstumpfabschnitten ausgebildet sein, etwa jeweils mit unterschiedlichen Winkeln zur Längsachse des Verbindungskörpers. Der Winkel, in dem die Mantelfläche des Verbindungskörpers zu dessen Längsachse steht, kann z.B. in einem Bereich von 0° bis 3°, vorzugsweise 1° liegen (Das heißt es liegt insgesamt ein Konuswinkel von 0° bis 6°, vorzugsweise 2° vor). Ein Gewinde kann in der Regel ohne Schwierigkeiten in einen derartigen Kegelstumpf geschnitten werden.

Eine Kegelstumpf-Form kann auch der Supportadapter aufweisen, der in der Regel ohnehin in seiner Form ähnlich zum Support ausgebildet sein kann. Entsprechend können auch für den Supportadapter Konuswinkel von 0° bis 6°, vorzugsweise 2° verwendet werden. Eine nach der Fertigung notwendige Formanpassung kann bei Vorliegen einer Kegelstumpf-Form vereinfacht werden.

Darüber hinaus wurde bereits ausgeführt, dass die Aufbauplattform ein Verbindungselement zur Verbindung des Abutments mit dem Implantat aufweisen kann, beispielsweise eine Halterungsvorrichtung zur Einbringung einer separaten Schraube. Um die Schraube in das Verbindungselement einzulegen und darüber hinaus später auch die Schraube festziehen zu können, muss ein entsprechender Freiraum in Form einer Ausnehmung vorgesehen werden, d.h. ein Schraubenkanal.

Je nach Winkel der prothetischen Einschubrichtung zur Längs-/ Mittelachse des Implantats bzw. je nach Größe der Schraube und der Aufbauplattform kann es notwendig sein, dass auch der Verbindungskörper unterbrochen wird, um die Schraube einbringen zu können. Aus dem Verbindungskörper kann also teilweise ein Bereich ausgeschnitten sein. Da der Verbindungskörper ein Außengewinde besitzt, ist es auch denkbar, dass dieses Außengewinde in gewissen Bereichen durch diese Ausnehmung unterbrochen ist. Aufgrund der Größe des Außengewindes und aufgrund der Tatsache, dass dieses bei der Verbindung mit dem Support, der in Form einer Hülse vorliegt, von diesem umgeben wird, kann jedoch immer noch eine feste Verbindung realisiert werden.

Im Allgemeinen können ein Zylinder bzw. ein Kegelstumpf jedoch fertigungstechnisch einfach realisiert werden und bilden dazu noch die Standardform, die als Grundlage zur Ausbildung eines Außengewindes dient, das in die entsprechende Mantelfläche eingeschnitten wird. Soweit es die Einzelbehandlung zulässt, kann das Abutment als vorgefertigtes Standardteil zur Verfügung stehen; zumindest kann eine Standard-Geometrie zur Verbindung von Abutment und Implantat oder innerhalb der Bauteile des Abutments bzw. Abutment-Systems verwendet werden.

Wie bereits dargestellt, kann der Verbindungskörper zwischen dem Außengewinde und der Aufbauplattform einen kegelstumpfartigen Bereich, also einen Abschnitt mit konisch zulaufendem bzw. mit einer Fase versehenem Außenmantel aufweisen, wobei der Verlauf der Fase zum Außengewinde hin im Durchmesser abnimmt. Die Fase kann insbesondere so verlaufen, dass der Durchmesser des Kegelstumpfes am Außengewinde mit dem des Außengewindes übereinstimmt. Ein solcher Übergang zwischen Verbindungskörper und Aufbauplattform bietet den Vorteil, dass ein verbessertes Abdichten erfolgen kann. Zum einen steht eine größere Abdichtfläche zur Verfügung, als wenn ein zylinderförmiger Verbindungskörper lediglich senkrecht mit durchgängigem Außengewinde auf der Außenmantelfläche auf die Aufbauplattform treffen würde. Wird die Support-Hülse auf den Verbindungskörper aufgeschraubt, so drückt diese in Richtung der Zylinder- bzw. Kegelstumpfachse auf die Aufbauplattform. Ist ein kegelstumpfförmiger Übergang somit vorgesehen, so wirkt eine Teilkomponente der Kraft auf die schräg hierzu verlaufende Kegelstumpfoberfläche und kann besonders wirksam in diesem Bereich abdichten. Eine formschlüssige Verbindung kann somit in besonders stabiler Weise erreicht werden.

Grundsätzlich ist denkbar, dass die Support-Hülse zylinderförmig ausgebildet ist. Sie kann aber auch sowohl in ihrem Inneren als auch im Bereich des Außenmantels an einen kegelstumpfförmigen Übergang vom Verbindungskörper zur Aufbauplattform angepasst sein, zum Beispiel kann eine (gegebenenfalls konische) Wölbung nach außen am Außenmantel der Hülse vorliegen. Der Außenmantel kann bei einer Ausführungsform auch als gänzlich konischer bzw. kegelstumpfförmiger Außenmantel ausgebildet sein. Auch im Innenbereich kann in dem Bereich, in dem die Hülse am Kegelstumpf anliegt, die Innenbohrung an den konischen Bereich des Supportträgers angepasst, also entlang der Längsachse zunehmend verbreitert sein.

Der Support kann an seiner Stirnseite eine Bohrung zur Einbringung einer Schraube bzw. einer Verdrehsicherung aufweisen. Prinzipiell kann eine derartige Bohrung für verschiedene Zwecke verwendet werden. Eine Verdrehsicherung kann bei einer Ausführungsform der Erfindung insbesondere durch eine Mehrkantausnehmung realisiert werden, die als Rotationssicherung für Klebebasen im Kronen-, Brücken- oder Stegbereich dient. Ferner kann diese Mehrkantausnehmung auch als Werkzeugaufnahme Verwendung finden, z.B. kann ein Werkzeug zum Drehen des Supports passgenau in die Mehrkantausnehmung eingesetzt werden und beim Drehen greifen. Darüber hinaus kann eine Fassung für eine Zusatzschraube beim Verschluss für bestimmte Ausführungsformen der Suprakonstruktionen oder Aufnahmen für Scanbodys vorteilhaft auf diese Weise eingearbeitet werden.

Die vorliegende Erfindung zeichnet sich insbesondere auch dadurch aus, dass sie grundsätzlich auch Abutments zur Verfügung stellen kann, die für Implantate mit einem Durchmesser des in den Knochen einzubringenden Gewindes von mindestens 3 mm verwendet werden können. Entsprechende Ausführungsformen des Abutments können nämlich in ihren Ausdehnungen um die Restaurationsachse herum gesehen vergleichweise schmal ausgebildet sein, und dennoch eine stabile Verbindung zwischen Implantat und Suprakonstruktion herstellen, sind aber aufgrund ihrer geringen Baugröße praktisch universell einsetzbar.

In besonders vorteilhafter Weise kann die Längsachse des Verbindungskörpers sehr präzise in Richtung der Restaurationsachse ausgerichtet sein, wobei die Aufbauplattform sodann senkrecht oder im Wesentlichen senkrecht zur Restaurationsachse steht. Bei erfindungsgemäßen Ausführungsbeispielen kann nämlich der Winkel zur prothetischen Einschubrichtung, der mit der Längs- / Mittelachse des Implantats eingeschlossen wird, besonders gut ausgeglichen werden. Lediglich ist das Verbindungselement bzw. dessen Ausrichtung an die prothetische Einschubrichtung anzupassen. Das Abutment, insbesondere der Verbindungskörper bzw. die Achse des Außengewindes können so ausgerichtet sein, dass sie der Ausrichtung der Längsachse des späteren Zahnersatzes entsprechen, also in Richtung der Restaurationsachse verlaufen.

Hat also der Zahnarzt, der das Implantat einsetzt, den Supportträger am Implantat befestigt (durch Festziehen der entsprechenden Schraube), so kann er lotrecht, also parallel zu den weiteren Zähnen den Zahnersatz aufbauen und auch die Support-Hülse parallel zu dieser Restaurationsachse einschrauben. Somit wird auch die Gefahr minimiert, dass beim Einschrauben der Support-Hülse bzw. auch beim Aufbau des verbleibenden Zahnersatzes aus geometrischen Gründen benachbarte Zähne den Einbau der Zahnprothese behindern. Die Erfindung bzw. Ausführungsformen der Erfindung eignen sich also insbesondere auch für den Einzelzahnersatz, bei dem noch stärker geometrische Zwangsbedingungen vorliegen können. Es wird also eine besonders gute Eingliederbarkeit erreicht, bei der auch Divergenzen in der Ausrichtung und vergleichsweise große Winkel zwischen der prothetischen Einschubrichtung und der Längs-/Mittelachse des Implantats ausgeglichen werden können. Nach Einbringung des Supportträgers kann der Zahnarzt, der das Implantat einsetzt, in der Regel stets lotrecht in Richtung der Restaurationsachse arbeiten.

Festsitzende Arbeiten können auf diesem Abutment aufzementiert werden.

Bedingt abnehmbare Suprakonstruktionen können auf dem Abutment generell okklusal am Support mit oder ohne integriertem Rotationsschutz aufgebracht und durch eine Schraube gesichert werden, wodurch hier eine sehr einfache Zugangsmöglichkeit zum Lösen der Suprakonstruktion besteht. Hierfür können präfabrizierte Hülsen als Supportadapter zur Anwendung kommen.

Die Verwendung derartiger Hülsen bzw. Supportadapter ist besonders vorteilhaft bei angestrebten Veränderungen, z.B. Reparatur, Korrektur etc., und hier ist es auch möglich, jederzeit Nachsorge zu betreiben.

Der Grund dafür besteht darin, dass am Support grundsätzlich die Möglichkeit besteht die Suprakonstruktion durch eine Schraube zu verbinden.

Abnehmbare Arbeiten können direkt auf dem Support mittels präfabrizierten Hülsen, den Supportadaptern, welche kongruent der Aufbauform des Abutments sind, einfach mit der Suprakonstruktion, z.B. durch Verkleben, verbunden werden.

Bei einer Weiterbildung der Erfindung kann die Suprakonstruktion wiederum über eine Schraubverbindung mit dem Supportadapter verbunden werden. Zum Beispiel kann der Supportadapter an seinem Außenmantel ein Gewinde aufweisen und dementsprechend in die Suprakonstruktion eingeschraubt werden. Durch diese Weiterbildung kann der Supportadapter als Präfabrikat bereitgestellt werden bzw. können dessen Konstruktionsdaten auf Abruf für eine Fertigung bereitliegen. Die für den Einzelfall herzustellende Suprakonstruktion kann, unabhängig von dieser speziellen, nach außen hin sichtbaren Formgebung, mit einer Bohrung und passendem Innengewinde zur Verbindung mit dem Supportadapter ausgestattet werden.

Auf dem Supportträger kann ein Scanbody befestigt werden. Hierdurch kann die Geometrie des Aufbaus in einer Datenbank hinterlegt werden, womit ein erheblicher Vorteil bezüglich der Präzision und dem damit verbundenen Konstruktionsaufwand beim Aufbau der Suprakonstruktion einhergeht.

Weiterer Vorteil besteht darin, dass exakte Lagebestimmungen der Aufbauten generiert werden können, die ggf. durch eine Abformung nicht korrekt umgesetzt wurden und somit vereinfacht korrigiert und angepasst werden können.

Die Einheit aus verdrehsicher miteinander befestigtem Supportträger und seinem Support ist zum Beispiel für festsitzende, bedingt abnehmbare und auch vollständig abnehmbare Suprakonstruktionen geeignet. Hierzu kann beispielsweise eine Schraube mit einem Mehrkantaufsatz durch eine Bohrung in der Suprakonstruktion geschraubt sein, welche den Support und die Suprakonstruktion miteinander verbindet bzw. sichert.

Bei einer vorteilhaften Ausführungsvariante der Erfindung kann die Suprakonstruktion als festsitzendes, bedingt abnehmbares oder auch vollständig abnehmbares Modul ausgebildet ist. Im Falle einer Revision etwa kann die Suprakonstruktion insgesamt als Einheit bzw. Modul sodann entnommen werden.

Entsprechend ist eine weitere Ausführungsform der Suprakonstruktion (direkt aber auch indirekt mit den präfabrizierten Klebehülsen) mit einem zumindest teilweise angebrachten Innengewinde in der Durchgangsbohrung der Suprakonstruktion versehen. Diese vorteilhafte Ausführung bietet dem Behandler die Möglichkeit die Schrauben außerhalb des Mundes in der Suprakonstruktion teilweise einzubringen, um diese mit dem Support zu verbinden. Diese Maßnahme kann folgende Vorteile mit sich bringen:
- ein schnelleres Verschrauben im Mund,
- ein sicheres Handling im Mund,
- mehr Arbeitsraum,
- eine sichere Vorpositionierung,
- eine vereinfachtes Lösen von Suprakonstruktionen vom Support, welche z.B. durch Kaltverschweißung (etwa infolge von Kaukrafteinwirkung) oder auch durch zusätzliches Verkleben durch den Behandler auf dem Support sich nicht ohne Weiteres trennen lassen.

Eine Suprakonstruktion kann direkt auf dem Abutment konstruiert bzw. modelliert werden. Die indirekte Methode beinhaltet ein Zwischenteil bzw. einen Supportadapter, etwa eine Klebehülse, welche in die Suprakonstruktion eingeklebt wird.

Dieses Verfahren ist das sogenannte Passive-Fit-Verfahren und wird für die Passivierung, d.h. den spannungsfreien Sitz von Suprakonstruktionen, angewendet.

Es kann beispielsweise eine Schraube mit einem Mehrkantaufsatz durch eine Bohrung in die Support-Hülse geschraubt sein, die zuvor entsprechend entnommen werden muss. Da diese Schraube auf der Grundfläche der Support-Hülse eingebracht ist, besteht nach Entfernen der Suprakonstruktion eine einfache Zugangsmöglichkeit. Ist die Support-Hülse entfernt, so kann die Schraube, mit der das Implantat mit dem Supportträger befestigt ist, ebenfalls in einfacher Weise erreicht werden, da hierfür in der Regel eine Ausnehmung im Verbindungskörper und/oder in der Aufbauplattform vorgesehen ist. Die zugänglich gemachte Schraube kann entsprechend gelöst werden und der Supportträger, auch bei Bestehen einer Verdrehsicherung, entfernt werden.

Grundsätzlich ist es auch denkbar, dass das Verbindungselement nicht lediglich in einer Aufnahme oder Halterung für eine Schraube besteht, sondern eine anderweitige Form der Befestigung zwischen Implantat und Supportträger verwendet, z.B. eine unmittelbar am Supportträger angebrachte Schraube bzw. auch ein am Supportträger unmittelbar gefertigtes Gewinde, ein Innengewinde usw. Im Allgemeinen bedeutet eine solche Ausführungsform jedoch, dass der gesamte Supportträger beim Einbau bei der Befestigung am Implantat mitrotiert werden muss. Eine solche Ausführungsform eignet sich in der Regel allenfalls bei kleinen Zahnersatz-Einbauten.

Bei einer Weiterbildung der Erfindung kann der Support an seiner Mantelfläche wenigstens eine Einkerbung zur Oberflächenvergrößerung und zur verbesserten Aufnahme und Halterung eines aufgebrachten Suprakonstruktions-Körpers aufweisen. Derartige Einkerbungen können beispielsweise zur Oberflächenvergrößerung dienen, damit ein aufgebrachter Kleber mehr Haltefläche zur Verfügung hat. Zudem wird die Haltefähigkeit vergrößert, wenn Material der Suprakonstruktion oder des die Suprakonstruktion haltenden Klebers in Einkerbungen in der Mantelfläche des Supports eindringen kann.

Das Außengewinde des Supportträgers und das Innengewinde des Supports können im verbundenen Zustand vor allem als spielfreie Lagerung ausgebildet sein, um einen festen Halt zu ermöglichen. Es handelt sich um eine formschlüssige Verbindung.

Das erfindungsgemäße Abutment-System umfasst, zusätzlich zu einem Abutment, insbesondere einem zweiteiligen Abutment, noch einen Supportadapter, der zum Aufbau der Suprakonstruktion, z.B. einer Krone dient. Der Support kann dazu dienen, den Schraubenkanal im Supportträger abzudichten. Supportträger und Support können wiederum verdrehsicher miteinander verbunden werden, indem etwa eine zusätzliche Schraubverbindung seitlich zur Mittelachse versetzt oder mit einer Mehrkantausnehmung eingesetzt wird. Der Supportadapter kann auch bewusst ohne Verdrehsicherung auf dem Support angebracht werden, um gewisse geometrische Ungenauigkeiten ausgleichen zu können. Es kann vorkommen, dass ein Gewinde einer Zahnprothese bricht. Um in einem solchen Fall eine Revision bzw. eine Reparatur durchführen zu können, müssen meist spezielle Werkzeuge verwendet werden, um die Gewindebohrung, etwa im Implantat wieder von dem verbliebenen Gewindestück freimachen zu können. Eine zusätzliche Bohrung, etwa mit einem Gewinde, die zum Beispiel als Verdrehsicherung für das Abutment dient, kann in vorteilhafter Weise auch zur Aufnahme eines Werkzeugs zur Demontage des Abutments verwendet werden. Eine Ausführungsvariante des Abutment-Systems kann also als modularer Aufbau ebenfalls ausgeführt sein, sodass das Abutment ein Modul bildet, an das ein weiteres Modul, die Suprakonstruktion, über den Supportadapter angebracht werden kann.

In vorteilhafter Weise zeichnet sich ein Herstellungsverfahren für entsprechende Abutments bzw. Abutment-Systeme dadurch aus, dass geometrische Ausgangsdaten als Grundlage und Ausgangspunkt für die Konstruktion verwendet werden können. Zum Beispiel können die geometrischen Daten bzw. Ausmaße des Supportadapters als Ausgangspunkt bei der Herstellung verwendet werden. Danach bestimmen sich die Größen des Supports, auf den der Supportadapter aufgebracht wird, und entsprechend auch die des Supportträgers. Die Anschlussgeometrien für diese Abutment-Teile können also auch vorgegeben sein. Diese Daten können in einer Datenbank bereits vor Beginn der Konstruktion zur Verfügung stehen.

### Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:
- Figur 1:: einen Supportträger gemäß der Erfindung,
- Figur 2:: einen Supportträger gemäß der Erfindung mit zusätzlichem konzentrisch angeordnetem Innengewinde,
- Figur 3:: einen Supportträger gemäß der Erfindung mit zusätzlichem nicht konzentrisch angeordnetem Innengewinde,
- Figur 4:: einen Support gemäß der Erfindung,
- Figur 5:: einen Supportadapter mit darauf angebrachter Suprakonstruktion,
- Figur 6:: eine Anordnung von Abutments gemäß der Erfindung im Unterkiefer, sowie
- Figur 7:: ein Abutment gem. der Erfindung.

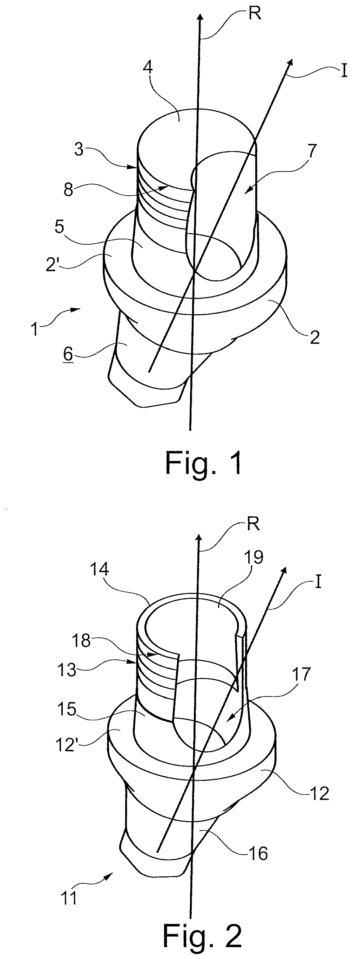

Figur 1 zeigt einen Supportträger 1 gemäß der Erfindung mit einer Aufbauplattform 2, auf der wiederum ein Verbindungskörper aufgebaut ist, der zur Herstellung einer formschlüssigen Verbindung mit einem Support dient. Supportträger 1 und Support bilden sodann das Abutment gemäß der Erfindung. Der Verbindungskörper 3 besteht im oberen Teil aus einem zylinderförmigen Aufbau 4 und im unteren Teil, welcher der Aufbauplattform 2 zugewandt ist, aus einem kegelstumpfartigen Bereich 5 mit konischer Fase, wobei sich dessen Durchmesser zur Aufbauplattform 2 hin vergrößert.

Darüber hinaus besitzt der Supportträger 1 ein Verbindungselement 6, welches zur Aufnahme einer Schraube dient, wobei der Supportträger 1 über die Schraube mit einem Implantat verbunden werden kann. Die Restaurationsachse R stimmt mit der Längsachse durch den Verbindungskörper 3 und mit einem Lot auf der Oberfläche 2' der Aufbauplattform 2 überein. Das Verbindungselement 6 wiederum ist so ausgerichtet, wie es das im Knochen eingebrachte Implantat verlangt, nämlich in Richtung der Längs-/Mittelachse I des Implantats. Diese ist im Allgemeinen gewinkelt zur Restaurationsachse R angeordnet. Um eine separate Schraube entsprechend in das Verbindungselement 6 einbringen zu können, ist in den Verbindungskörper 3 und die Aufbauplattform 2 eine Ausnehmung / Öffnung 7 als Schraubenkanal, d.h. zur Einbringung einer Schraube in das Verbindungselement 6, eingearbeitet. Am Außenmantel des zylindrischen Bereichs 4 ist ein Außengewinde 8 angeordnet. Auf das Außengewinde 8 kann eine Support-Hülse aufgeschraubt werden.

Der Supportträger 11 gemäß Figur 2 umfasst ebenfalls eine Aufbauplattform 12 mit einer senkrecht zur Restaurationsachse R angeordneten Aufbauebene 12', wobei auf der Aufbauplattform 12 wiederum ein Verbindungskörper 13 zur Herstellung einer Verbindung mit einem Support vorgesehen ist. Dieser Verbindungskörper 13 unterteilt sich wiederum in einen zylindrischen Bereich 14 und in einen kegelstumpfartigen Bereich 15, welcher an die Aufbauplattform 12 angrenzt. Zur Herstellung einer Verbindung mit einem Implantat ist ein Verbindungselement 16 vorgesehen, welches sich ebenfalls im unteren Bereich an die Aufbauplattform 12 anschließt. Um eine Schraube in das Verbindungselement 16 einzubringen, ist eine Ausnehmung 17 durch den Verbindungskörper 13 und die Aufbauplattform 12 vorgesehen, die zum Teil die Funktion eines Schraubenkanals bildet. Die Restaurationsachse R bildet wiederum die Längsachse durch den Verbindungskörper 13 und ein Lot auf der Ebene der Aufbauplattform 12'. Die Längs-/Mittelachse I des Implantats ist gewinkelt zur Restaurationsachse R (bzw. zur prothetischen Einschubrichtung) angeordnet. Im Unterschied zum Supportträger 1 aus Figur 1 ist die Öffnung 17 beim Supportträger 11 so erweitert, dass diese in eine konzentrische Bohrung mit einer Längsachse parallel zur Restaurationsachse R durch den Verbindungskörper 13 sich erweitert. Diese zylindrische Ausnehmung als Teil der Ausnehmung 17 ist im vorliegenden Ausführungsbeispiel mit einem Innengewinde 19 versehen. Der zylindrische Teil 14 ist mit einem Außengewinde 18 zur formschlüssigen Verbindung des Supportträgers 11 mit einem Support versehen. In das Innengewinde 19 kann eine Schraube eingebracht werden, die beispielsweise zusätzlich den Support hält und mit einer Verdrehsicherung ausgestattet sein kann.

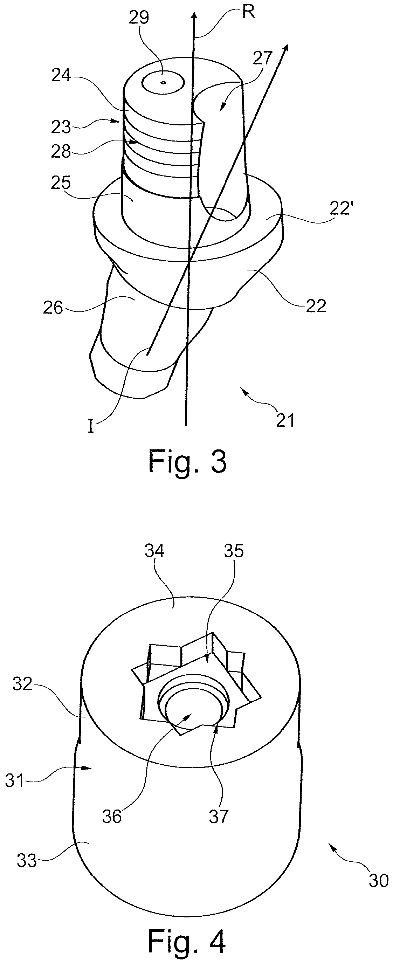

Eine weitere Variante der Erfindung ist in Figur 3 mit dem Supportträger 21 dargstellt: Auch dieser umfasst eine Aufbauplattform 22 mit einer Aufbauebene 22', einen Verbindungskörper 23, der sich in einen zylindrischen Abschnitt 24 und einen der Aufbauplattform 22 zugewandten kegelstumpfförmigen Abschnitt 25 unterteilt. Das Verbindungselement ist mit Bezugzeichen 26 gekennzeichnet. Der Verbindungskörper 23 sowie die Aufbauplattform 22 sind durch eine Ausnehmung 27, die als Schraubenkanal dient, zum Teil ausgeschnitten. Der zylindrische Teil 24 ist wiederum mit einem Außengewinde 28 versehen, das durch die Ausnehmung 27 unterbrochen wird. Durch die Ausnehmung 27 kann eine Schraube in das Verbindungelement 26 eingebracht werden, um den Supportträger 21 an einem Implantat zu befestigen. Durch den Verbindungskörper 23 läuft jedoch noch eine zusätzliche Ausnehmung 29, die ebenfalls mit einem Innengewinde versehen ist. Diese Ausnehmung 29 ist als Sackloch ausgebildet, das nicht mit der Längs- bzw. Mittenachse des zylindrischen Abschnitts 24 übereinstimmt (gegebenenfalls aus Platzgründen und/oder zur Verdrehsicherung). Eine Schraube, die z.B. eine Verdrehsicherung schließlich ausbildet, kann durch den Support in dieses Sackloch eingebracht und befestigt werden.

Figur 4 wiederum zeigt einen Support 30, der als Hülse ausgebildet ist. Diese Hülse besitzt eine äußere glatte Mantelfläche 31, die wiederum in zwei Bereiche unterteilt werden kann, nämlich in einen rein zylindrischen Bereich 32 und in einen konischen Halsbereich 33, der in seinem Durchmesser verbreitert ist, um eine Anpassung an die Kegelstumpfbereiche 5, 15 und 25 zu bilden. Durch die obere Grundfläche 34 verläuft eine Bohrung 35, die zum einen eine Fassung für eine Zusatzschraube bilden kann, die etwa in Bohrungen 19 und 29 aus den Figuren 2 und 3 (je nach geometrischer Anordnung) eingebracht werden kann. Darüber hinaus ist ein Mehrkant 37 vorgesehen, der zum einen als Werkzeugaufnahme dienen kann, mit der die Support-Hülse zum Beispiel verdreht wird. Darüber hinaus kann dieser Mehrkant auch als Rotationssicherung dienen. Die Hülse 30 besitzt im Inneren ein Innengewinde, welches auf die Außengewinde 8, 18 bzw. 28 aus den Figuren 1 bis 3 passt, sodass eine formschlüssige Aufnahme des Supports 30 auf den jeweiliegen Supportträgern 1, 11, 21 möglich ist.

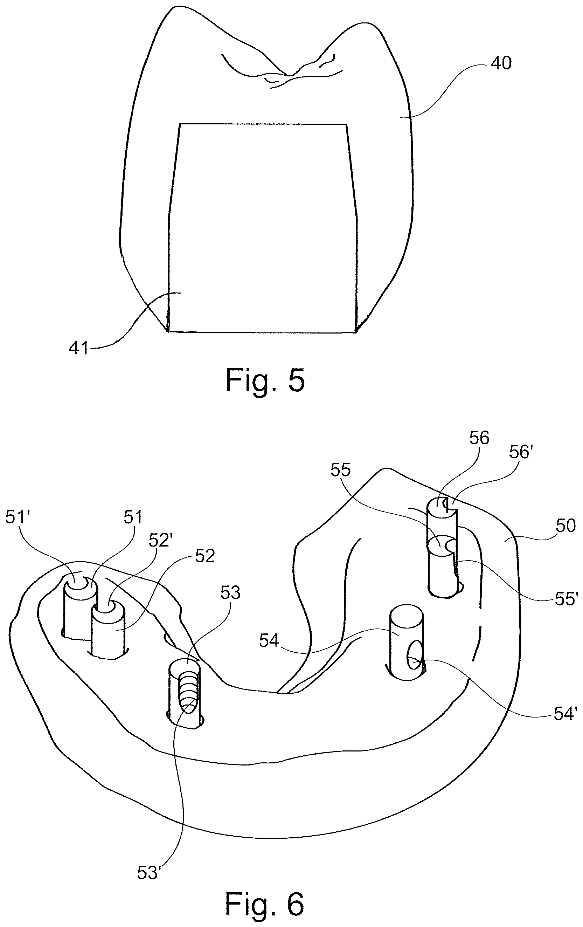

Figur 5 zeigt wiederum eine Suprakonstruktion 40, die auf einem Supportadapter 41 in Form einer Hülse angebracht ist. Die Anbringung der Suprakonstruktion 40 am Supportadapter 41 erfolgt durch Verkleben.

Figur 6 wiederum zeigt einen Kiefer 50, in den Abutments 51, 52, 53, 54, 55, 56 eingebracht sind. Die Restaurationsachsen R stehen jeweils senkrecht zum Kiefer und relativ genau parallel zueinander. Die Ausnehmungen 51', 52', 53', 54', 55' und 56' sind an die jeweiligen Gegebenheiten angepasst und richten sich nach den unterschiedlichen Längs- / Mittelachsen der Implantate. Dementsprechend nehmen sie auch unterschiedliche Teile der jeweiligen Verbindungskörper aus.

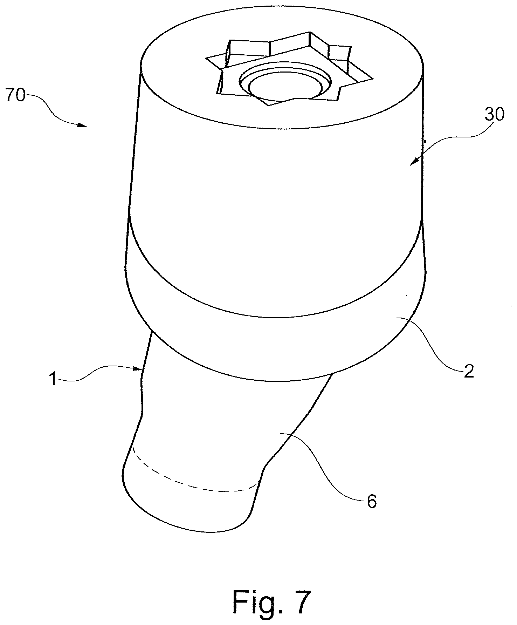

Exemplarisch ist in Figur 7 ein Abutment 70 gem. der Erfindung im zusammengesetzten Zustand dargestellt, welches folglich einen Supportträger 1 und einen darauf angebrachten Support 30 umfasst.

### Bezugszeichenliste

- 1: Supportträger
- 2: Aufbauplattform
- 2': Aufbauplattform-Ebene
- 3: Verbindungskörper
- 4: zylindrischer Bereich
- 5: kegelstumpfförmiger Bereich
- 6: Verbindungselement
- 7: Ausnehmung
- 8: Außengewinde
- 11: Supportträger
- 12: Aufbauplattform
- 12': Aufbauplattform-Ebene
- 13: Verbindungskörper
- 14: zylindrischer Bereich
- 15: kegelstumpfförmiger Bereich
- 16: Verbindungselement
- 17: Ausnehmung
- 18: Außengewinde
- 19: Innengewinde
- 21: Supportträger
- 22: Aufbauplattform
- 22': Aufbauplattform-Ebene
- 23: Verbindungskörper
- 24: zylindrischer Bereich
- 25: kegelstumpfförmiger Bereich
- 26: Verbindungselement
- 27: Ausnehmung
- 28: Außengewinde
- 29: Sacklochbohrung
- 30: Support-Hülse
- 31: Außenmantel
- 32: zylindrischer Kopfbereich
- 33: konischer Mantelbereich
- 34: Grundfläche
- 35: Bohrung
- 36: Aufnahme für Schraube
- 37: Mehrkantaufnahme
- 40: Suprakonstruktion
- 41: Supportadapter
- 50: Kiefer
- 51-56: Abutment
- 51'-56': Ausnehmungen
- 70: Abutment
- R: Restaurationsachse / prothetische Einschubrichtung
- I: Längs-/Mittelachse des Implantats

## Patentansprüche

1. Abutment (51, 52, 53, 54, 55, 56, 70) als Zwischenstück zwischen einem Implantat und einer Suprakonstruktion (40), insbesondere einer Krone, umfassend zwei miteinander verbindbare und/oder verbundene Abutment-Teile, wobei:
• eines der Abutment-Teile als Supportträger (1, 11, 21) zur Herstellung einer Verbindung mit dem Implantat und
• eines der Abutment-Teile als Support (30) zum Aufbau und/oder zur Befestigung der Suprakonstruktion (40) ausgebildet ist,
• wobei der Supportträger (1, 11, 21) ein Verbindungselement (6, 16, 26) zur Verbindung mit dem Implantat aufweist,
wobei
• der Supportträger (1, 11, 21) eine Aufbauplattform (2, 12, 22) bildet, auf der ein Verbindungskörper (3, 13, 23) ausgebaut ist, der ein Außengewinde (8, 18, 28) aufweist und senkrecht zur Aufbauplattform ausgerichtet ist,
• wobei der Support (30) als Hülse mit einem Innengewinde zur Verbindung mit dem Außengewinde (8, 18, 28) des Supportträgers (1, 11, 21) ausgebildet ist, wobei das Verbindungselement (6, 16, 26) gegenüber der Mittelachse des Verbindungskörpers (3, 13, 23), insbesondere bezüglich der Restaurationsachse (R) abgewinkelt ausgerichtet ist, wobei das Abutment genau zweiteilig ausgebildet ist, wobei ein Teil als Support und der andere Teil als Supportträger ausgebildet ist.

2. Abutment (51, 52, 53, 54, 55, 56, 70) nach Anspruch 1, **dadurch gekennzeichnet, dass** der Verbindungskörper (3, 13, 23) zumindest abschnittsweise, insbesondere vollständig, als Zylinder (4, 14, 24) und/oder als Kegelstumpf ausgebildet ist.

3. Abutment (51, 52, 53, 54, 55, 56, 70) nach einem der vorgenannten Ansprüche, **dadurch gekennzeichnet, dass** der Verbindungskörper (3, 13, 23) einen Abschnitt (5, 15, 25) zwischen Außengewinde (8, 18, 28) und Aufbauplattform (2, 12, 22) mit konisch zulaufendem und/oder mit einer Fase versehenem Außenmantel aufweist, wobei der Verlauf der Fase zum Außengewinde (8, 18, 28) hin im Durchmesser abnimmt, bis insbesondere der Durchmesser am Außengewinde mit dem des Außengewindes übereinstimmt.

4. Abutment (51, 52, 53, 54, 55, 56, 70) nach einem der vorgenannten Ansprüche, **dadurch gekennzeichnet, dass** der Support (30) an der Stirnseite eine Bohrung (35, 37) zur Einbringung einer Schraube und/oder einer Verdrehsicherung aufweist.

5. Abutment (51, 52, 53, 54, 55, 56, 70) nach Anspruch 4, **dadurch gekennzeichnet, dass** die Bohrung eine Mehrkantausnehmung (37) als Verdrehsicherung umfasst.

6. Abutment (51, 52, 53, 54, 55, 56, 70) nach einem der vorgenannten Ansprüche, **dadurch gekennzeichnet, dass** der Verbindungskörper (3, 13, 23) eine Ausnehmung (17, 27), insbesondere einen Schraubenkanal, aufweist, um die Einbringung einer Schraube in das Verbindungselement (6, 16, 26) zu ermöglichen und/oder Freiraum für den Einbau gegenüber benachbarten Zähnen und/oder Zahnprothesen zu erhalten, wobei insbesondere die Ausnehmung (17, 27) das Außengewinde (8, 18, 28) unterbricht.

7. Abutment (51, 52, 53, 54, 55, 56, 70) nach einem der vorgenannten Ansprüche, **dadurch gekennzeichnet, dass** der Support (30) an seiner Mantelfläche wenigstens eine Einkerbung zur Oberflächenvergrößerung und zur verbesserten Aufnahme und Halterung einer Suprakonstruktion, eines aufmodellierten Kronenkörpers aufweist.

8. Abutment (51, 52, 53, 54, 55, 56, 70) nach einem der vorgenannten Ansprüche, **dadurch gekennzeichnet, dass** das Außengewinde (8, 18, 28) des Supportträgers und das Innengewinde des Supports (30) im verbundenen Zustand eine spielfreie Lagerung und/oder Verbindung ausbilden.

9. Abutment (51, 52, 53, 54, 55, 56, 70) nach einem der vorgenannten Ansprüche, **dadurch gekennzeichnet, dass** der Supportträger (11, 21) und der Support (30) im verbundenen Zustand über eine Verdrehsicherung (19, 29, 35, 36, 37) in ihrer Position zueinander verdrehsicher lagerbar sind, wobei die Verdrehsicherung insbesondere als Schraubverbindung (19, 29, 35, 36, 37) durch Supportträger (11, 21) und Support (30) ausgebildet ist.

10. Abutment-System, umfassend ein Abutment (51, 52, 53, 54, 55, 56, 70) nach einem der vorgenannten Ansprüche und einen Supportadapter (41) zur Verbindung mit dem Support (30), auf dem eine Suprakonstruktion (40) aufbaubar und/oder anbringbar ist.

11. Abutment-System nach Anspruch 10, **dadurch gekennzeichnet, dass** der Supportadapter (41) wie folgt ausgebildet ist:
• der Supportadapter (41) ist formschlüssig mit dem Support (30) verbindbar, wobei der Supportadapter (41) insbesondere als Hülse zur Abdeckung des Supports (30) ausgebildet ist, und/oder
• der Supportadapter (41) ist mit dem Support (30) verklebbar ausgebildet und/oder
der Supportadapter (41) ist mit einem Gewinde, insbesondere an seiner äußeren Mantelfläche, zur Herstellung einer Verbindung mit einer auf dem Supportadapter (41) anzubringenden Suprakonstruktion versehen.

## Claims

1. An abutment (51, 52, 53, 54, 55, 56, 70) as an intermediate piece between an implant and a superstructure (40), in particular a crown, comprising two connectible and or connected abutment parts, wherein:
• one of the abutment parts is formed as a support carrier (1, 11, 21) for producing a connection to the implant, and
• one of the abutment parts is formed as a support (30) for constructing and/or fastening the superstructure (40),
• wherein the support carrier (1, 11, 21) has a connecting element (6, 16, 26) for connection to the implant,
wherein
• the support carrier (1, 11, 21) forms a construction platform (2, 12, 22), on which a connecting body (3, 13, 23) is mounted, which has an external thread (8, 18, 28) and is aligned perpendicular to the construction platform,
• wherein the support (30) is formed as a sleeve with an internal screw thread for connection to the external screw thread (8, 18, 28) of the support carrier (1, 11, 21), wherein the connecting element (6, 16, 26) is opposite the central axis of the connecting body (3, 13, 23), in particular angled with respect to the restoration axis (R), wherein the abutment is formed in exactly two parts, wherein one part is a support and the other part is a support carrier.

2. The abutment (51, 52, 53, 54, 55, 56, 70) according to claim 1, **characterised in that** the connecting body (3, 13, 23), at least in sections, in particular completely, is formed as a cylinder (4, 14, 24) and/or is formed as a truncated cone.

3. The abutment (51, 52, 53, 54, 55, 56, 70) according to any one of the preceding claims, **characterised in that** the connecting body (3, 13, 23) has a section (5, 15, 25) between the external screw thread (8, 18, 28) and the construction platform (2, 12, 22) with a conically tapering and/or chamfered outer jacket, wherein the course of the chamfer towards the external screw thread (8, 18, 28) decreases in diameter until in particular the diameter on the external screw thread coincides with that of the external screw thread.

4. The abutment (51, 52, 53, 54, 55, 56, 70) according to any one of the preceding claims, **characterised in that** the support (30) has a bore (35, 37) on the end face for introducing a screw and/or an anti-rotation device.

5. The abutment (51, 52, 53, 54, 55, 56, 70) according to claim 4, **characterised in that** the bore comprises a polygonal recess (37) as an anti-rotation device.

6. The abutment (51, 52, 53, 54, 55, 56, 70) according to any one of the preceding claims, **characterised in that** the connecting body (3, 13, 23) has a recess (17, 27), in particular a screw channel to enable the insertion of a screw into the connecting element (6, 16, 26) and/or to obtain free space for installation in relation to adjacent teeth and/or dental prostheses, wherein the recess (17, 27) in particular interrupts the external screw thread (8, 18, 28).

7. The abutment (51, 52, 53, 54, 55, 56, 70) according to any one of the preceding claims, **characterised in that** the support (30) has at least one indentation on its outer surface for enlarging the surface and for improved reception and retention of a superstructure, of a modelled crown body.

8. The abutment (51, 52, 53, 54, 55, 56, 70) according to any one of the preceding claims, **characterised in that** the external screw thread (8, 18, 28) of the support carrier and the internal screw thread of the support (30) form a play-free bearing and/or connection in the connected state.

9. The abutment (51, 52, 53, 54, 55, 56, 70) according to any one of the preceding claims, **characterised in that** the support carrier (11, 21) and the support (30) in the connected state can be mounted non-rotatably in their position relative to one another by means of an anti-rotation device (19, 29, 35, 36, 37), wherein the anti-rotation device is formed in particular as a screw connection (19, 29, 35, 36, 37) by the support carrier (11, 21) and the support (30).

10. An abutment system comprising an abutment (51, 52, 53, 54, 55, 56, 70) according to any one of the preceding claims and a support adapter (41) for connection to the support (30) on which a superstructure (40) can be constructed and/or connected.

11. The abutment system according to claim 10, **characterised in that** the support adapter (41) is formed as follows:
• the support adapter (41) can be positively connected to the support (30), wherein the support adapter (41) is formed in particular as a sleeve for covering the support (30), and/or
• the support adapter (41) is formed such that it can be glued to the support (30) and/or the support adapter (41) is provided with a screw thread, in particular on its outer circumferential surface, for establishing a connection to a superstructure to be attached to the support adapter (41).

## Revendications

1. Aboutement (51, 52, 53, 54, 55, 56, 70) en tant que pièce intermédiaire entre un implant et une superstructure (40), en particulier une couronne, comprenant deux parties d'aboutement raccordées et/ou pouvant être raccordées l'une à l'autre, dans lequel :
• une des parties d'aboutement et conçue sous la forme d'un porte-support (1, 11, 21) destiné à la production d'un raccordement à l'implant et
• une des parties d'aboutement est conçue sous la forme d'un support (30) destiné au montage et/ou la fixation de la superstructure (40),
• dans lequel le porte-support (1, 11, 21) comporte un élément de raccordement (6, 16, 26) destiné au raccordement à l'implant,
dans lequel
• le support (1, 11, 21) forme une plate-forme de montage (2, 12, 22) sur laquelle un corps de raccordement (3, 13, 23) est présent, lequel comporte un filetage extérieur (8, 18, 28) et lequel est orienté perpendiculairement à la plate-forme de montage,
• dans lequel le support (30) est conçu sous la forme d'un manchon doté d'un filetage intérieur destiné au raccordement au filetage extérieur (8, 18, 28) du porte-support (1, 11, 21), dans lequel l'élément de raccordement (6, 16, 26) est orienté de manière opposée à l'axe central du corps de raccordement (3, 13, 23), en particulier de manière coudée par rapport à l'axe de restauration (R), dans lequel l'aboutement est formé en exactement deux parties, dans lequel une partie est conçue sous la forme d'un support et l'autre partie est conçue sous la forme d'un porte-support.

2. Aboutement (51, 52, 53, 54, 55, 56, 70) selon la revendication 1, **caractérisé en ce que** le corps de raccordement (3, 13, 23) est conçu, au moins par sections, en particulier complètement, sous la forme d'un cylindre (4, 14, 24) et/ou sous la forme d'un cône tronqué.

3. Aboutement (51, 52, 53, 54, 55, 56, 70) selon l'une quelconque des revendications précédentes, **caractérisé en ce que** le corps de raccordement (3, 13, 23) comporte une section (5, 15, 25), entre le filetage extérieur (8, 18, 28) et la plate-forme de montage (2, 12, 22), doté d'une enveloppe extérieure se terminant en cône et/ou pourvue d'un chanfrein, dans lequel le cours du chanfrein vers le filetage extérieur (8, 18, 28) diminue de diamètre jusqu'à ce que, en particulier, le diamètre au niveau du filetage extérieur coïncide avec le diamètre du filetage extérieur.

4. Aboutement (51, 52, 53, 54, 55, 56, 70) selon l'une quelconque des revendications précédentes, **caractérisé en ce que** le support (30) comporte, sur la face d'extrémité, un alésage (35, 37) destiné à l'introduction d'une vis et/ou d'une sécurité anti-rotation.

5. Aboutement (51, 52, 53, 54, 55, 56, 70) selon la revendication 4, **caractérisé en ce que** l'alésage comprend un évidement polygonal (37) en tant que sécurité anti-rotation.

6. Aboutement (51, 52, 53, 54, 55, 56, 70) selon l'une quelconque des revendications précédentes, **caractérisé en ce que** le corps de raccordement (3, 13, 23) comporte un évidement (17, 27), en particulier un canal de vis, pour permettre l'insertion d'une vis dans l'élément de raccordement (6, 16, 26) et/ou pour obtenir un espace libre pour l'installation par rapport aux dents et/ou prothèses dentaires adjacentes, dans lequel, en particulier, l'évidement (17, 27) interrompt le filetage extérieur (8, 18, 28).

7. Aboutement (51, 52, 53, 54, 55, 56, 70) selon l'une quelconque des revendications précédentes, **caractérisé en ce que** le support (30) comporte, sur sa surface d'enveloppe, au moins une rainure destinée à l'agrandissement de la surface et au logement et à la retenue améliorés d'une superstructure d'un corps de couronne modélisé.

8. Aboutement (51, 52, 53, 54, 55, 56, 70) selon l'une quelconque des revendications précédentes, **caractérisé en ce que** le filetage extérieur (8, 18, 28) du porte-support et le filetage intérieur du support (30), dans un état raccordé, forment un logement et/ou un raccordement sans jeu.

9. Aboutement (51, 52, 53, 54, 55, 56, 70) selon l'une quelconque des revendications précédentes, **caractérisé en ce que** le porte-support (11, 21) et le support (30), dans l'état raccordé, peuvent être logés immobilisés en rotation l'un par rapport à l'autre, à l'aide d'une sécurité anti-rotation (19, 29, 35, 36, 37), dans leur position, dans lequel la sécurité anti-rotation, en particulier, est conçue sous la forme d'un raccordement à vis (19, 29, 35, 36, 37) à travers le porte-support (11, 21) et le support (30).

10. Système d'aboutement comprenant un aboutement (51, 52, 53, 54, 55, 56, 70) selon l'une quelconque des revendications précédentes et un adaptateur de support (41) destiné au raccordement au support (30), sur lequel une superstructure (40) peut être montée et/ou appliquée.

11. Système d'aboutement selon la revendication 10, **caractérisé en ce que** l'adaptateur de support (41) est conçu comme suit :
• l'adaptateur de support (41) peut être raccordé par complémentarité de forme au support (30), dans lequel l'adaptateur de support (41) est conçu, en particulier, sous la forme d'un manchon destiné à la couverture du support (30) et/ou
• l'adaptateur de support (41) est conçu de manière à pouvoir être collé sur le support (30) et/ou l'adaptateur de support (41) est pourvu d'un filetage, en particulier sur sa surface d'enveloppe externe, pour produire un raccordement avec une superstructure à appliquer sur l'adaptateur de support (41).
